# EUROPEAN PATENT APPLICATION

(11) **EP 3 702 411 A1**
(43) Date of publication of application: **02.09.2020**
(21) Application number: 19382136.0
(22) Date of filing: 26.02.2019
(51) Int. Cl.: C08L 95/00, B01J 13/00, C04B 26/26, E01C 7/18

(54) **SELF-HEALING ASPHALT BY REJUVENATOR-CONTAINING MICROCAPSULES ACTIVATABLE AT WILL BY IRRADIATION**

(71) Applicant: Compania Espanola de Petroleos S.A.U. (CEPSA), 28046 Madrid (ES); Universidad Carlos III de Madrid, 28918 Leganés, Madrid (ES)
(72) Inventor: PÉREZ MENA, Vicente, E-28046 Madrid (ES); GONZÁLEZ GONZÁLEZ, María, E-28046 Madrid (ES); PÉREZ BARRENO, Ignacio, E-28046 Madrid (ES); AGZENAI BEN SALEM, Yahya, E-28919 Leganés, Madrid (ES); CABANELAS VALCÁRCEL, Juan Carlos, E-28919 Leganés, Madrid (ES); BASELGA LLIDÓ, Juan, E-28919 Leganés, Madrid (ES)
(74) Representative: ABG Intellectual Property Law, S.L.

(57) **Abstract**

The invention refers to a self-healing bitumen which comprises microcapsules breakable at will by irradiation, said microcapsules comprising:
a polymer shell obtainable by means of a multi-step polymerization method; and
a core comprising a bitumen rejuvenator and a radiation absorber.

## Description

### FIELD OF THE INVENTION

The present invention relates to the field of material technology and more particularly to road construction and maintenance. More specifically, it relates to a modified asphalt binder (bitumen) that contains microcapsules with a rejuvenator material inside, the release of which allows reinstating the original properties of asphalt mixtures in roads, pavements and other infrastructures.

### BACKGROUND OF THE INVENTION

Asphalt binder (also known as bitumen in Europe or asphalt in the USA) is a viscoelastic material produced through the refining of petroleum and widely used on paving roads and streets (more than 94% of pavements around the world are based on asphalt binder). It adheres to aggregate particles binding them in asphalt concrete (also referred to as simply asphalt or asphalt mix). Asphalt binder is composed of four distinct chemical fractions, namely asphaltenes, resins, aromatics, and saturates. Resins, aromatics, and saturates are collectively referred to as maltenes. The high molecular weight asphaltenes form a colloidal suspension in low molecular weight maltenes.

Ideally, asphalt must preserve its initial properties despite the daily traffic loads and the climate changes (especially temperature and moisture) for a prolonged period. However, after an in-service period of a few years, the flexibility and relaxation capacity of asphalt concrete decreases, the binder becomes brittle causing aggregate segregation, and an extensive damage appears on its surface. This ageing process begins at the hot mixing initial stage and continues throughout its service life due to heat, oxygen, and ultraviolet radiation (UV) exposure. That is the reason why asphalt concrete wearing courses should be regularly maintained and repaired.

Pavement repair and rehabilitation is handled in many ways, ranging from sealing or filling cracks, to resurfacing, which is both uneconomical and technically unsound.

It is well-known that bitumen has a self-healing capacity for repairing ageing damage which restores its functionality at least to some extent. The healing rate of bitumen increases with temperature. In view of the self-healing property of bitumen and his temperature dependency, thermal-based technologies and composite materials have been proposed to repair pavements by enhancing the self-healing capability of bitumen. For a review on self-healing asphalt composites, see: Agzenai et al., 2015.

One of the self-healing methods for asphalt pavements that have been reported is the incorporation of nanoparticles such as nanoclays and nanorubbers. Nanoparticles are used in the bitumen mix to improve the physical and mechanical properties of the binders and, as such, to improve in-situ performance of an asphalt pavement. However, they also have the potential to repair micro-cracks in asphalt. The nanoparticles tend to move towards the tip of the crack, driven by the high surface energy, and thus stop crack propagation and heal damaged asphalt material. Although nanoparticle self-healing technology has demonstrated its potential in asphalt pavement mix design, more substantial evidence of its performance must be demonstrated before it becomes acceptable as a viable self-healing technology.

The addition of conductive additives that may improve its thermal and electrical conductivity and the use of adequate devices to locally heat the pavement (e.g microwave or induction heating) represent a useful strategy to heal the cracks and repair the pavement. The principle of self-healing asphalt mixtures by bitumen temperature increase was used to create an asphalt mixture with crack-healing properties (Garcia et al., 2010; Liu et al., 2011). In these mixtures, metals, normally steel wool fibers, are added because they absorb and conduct more thermal energy than bitumen and aggregates, improving the electrical conductivity of the mixtures (Menozzi et al., 2015). To artificially heat and heal this type of asphalt mixture, an external electromagnetic field, such as those applied by electromagnetic induction or microwaves, is used to increase the fiber temperature. Later, the fiber heat transfers to the bitumen and aggregates, reducing the bitumen viscosity and repairing open cracks (Gallego et al., 2013; Garcia et al., 2015). To date the main drawbacks of these thermal-based approaches are the high costs due to great energy consumption as well as significantly traffic disruptions. Further, it is important to bear in mind that the heating of bitumen serves to increase its healing rate since the heated bitumen flows more easily across the cracks but there is no reconstitution of the bitumen chemical composition i.e. rejuvenation.

Another line of research to reinstate the asphalt original properties is focused on the use of encapsulated rejuvenators inside the bitumen to restore the asphaltene/maltene ratio. This is probably the only method aimed at restoring the original properties of existing pavements and reconstituting the bitumen chemical composition. In this approach, rejuvenators, usually lubricating and extender oils which contain a high proportion of maltene constituents, are encapsulated and embedded within the asphalt concrete so that once the crack reaches the microcapsules they break and release the rejuvenator. The released oily liquid will be mixed with the surrounding aged asphalt because of the capillary action. Thus, the asphalt will be softened, which leads to the enhancement of the material's self-healing ability. The inclusion of a rejuvenator into the asphalt mix via microcapsules to restore the original binder properties is a self-healing method that has been studied, among others, by Chung et al. 2015, Su and Schlangen 2012, and Garcia et al. 2010. As more recent works, Sun et al. 2018 and Al-Mansoori et al. 2018 can be mentioned. The use of self-healing microcapsules containing rejuvenator is aimed at increasing durability of asphalt pavements, reducing the need for classical in-situ maintenance processes. However, to date the main drawback of this technology is that the breakage of the microcapsules is uncontrolled since it is governed by unpredictable external mechanical stresses and therefore the capsules may accidentally break too early or at an unnecessary time and said release of rejuvenator leads to excessive softening of the asphalt binder.

A need thus exists to provide new self-healing asphalt technology that allows reducing or eliminating the drawbacks of the methods reported in the state of the art.

### BRIEF DESCRIPTION OF THE INVENTION

Described herein is a novel approach for the preparation of bitumen with improved self-healing and rejuvenating capacity. The solution provided by this invention is based on the use of hard shell microcapsules that contain a bitumen rejuvenator and a radiation absorber so that when subjected to irradiation in the wavelength range of the absorption of the absorber there is an increase of the local temperature that causes the microcapsules to break, releasing the rejuvenator into the asphalt. Advantageously, this technique reduces the costs and energy consumption associated with the thermal-based methods known in the prior art for repairing asphalt and has also the benefit over the current self-healing microencapsulation alternatives that the rejuvenator is released in a controlled fashion, i.e. at will. Moreover, unlike the known use of microcapsules that break by mechanical stresses, in the present invention the release of the rejuvenators takes place in a hot environment, enhancing their diffusion into the asphalt.

Thus, in a first aspect, the present invention is directed to microcapsules comprising:
a polymer shell; and
a core comprising a bitumen rejuvenator and a radiation absorber;
said microcapsules being obtainable by a process as defined below.

A further aspect is directed to a process for preparing the microcapsules of the invention, said process comprising:
i) preparing an emulsion comprising droplets of an organic phase which comprise the core materials; and
ii) encapsulating said core materials by polymerizing in situ at least one prepolymer at the periphery of said droplets, wherein the polymerization is carried out in two or more steps by mixing a first portion of prepolymer with the emulsion so that a first polymerization step takes place, performing a second polymerization step with a second portion of prepolymer, and optionally performing further polymerization steps with further portions of prepolymer.

A further aspect is directed to a self-healing bitumen which comprises the microcapsules of the invention.

A further aspect is directed to an asphalt mixture or an infrastructure comprising the self-healing bitumen of the invention.

A further aspect is directed to the use of the microcapsules of the invention in the preparation of a self-healing bitumen.

A further aspect is directed to a method for repairing an infrastructure which comprises the self-healing bitumen of the invention, said method comprising irradiating the infrastructure in the wavelength range of the absorption of the absorber.

These aspects and preferred embodiments thereof are additionally also defined hereinafter in the detailed description and in the claims.

### BRIEF DESCRIPTION OF THE FIGURES

To better understand the invention, its objects and advantages, the following figures are attached to the specification in which the following is depicted:

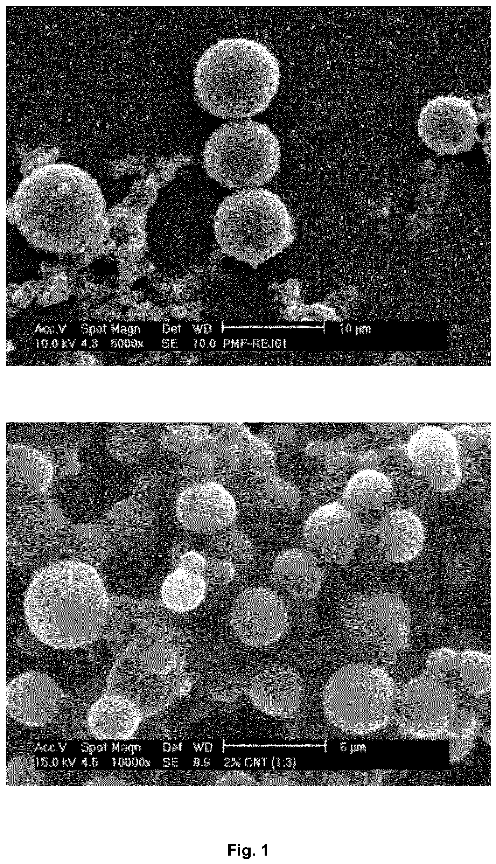

**Figure 1** shows Scanning Electron Microscope (SEM) images of microcapsules of the present invention obtained according to example 1 (using 2% carbon nanotubes (CNT) as radiation absorber), having an average particle size between from about 2 and about 25 µm.

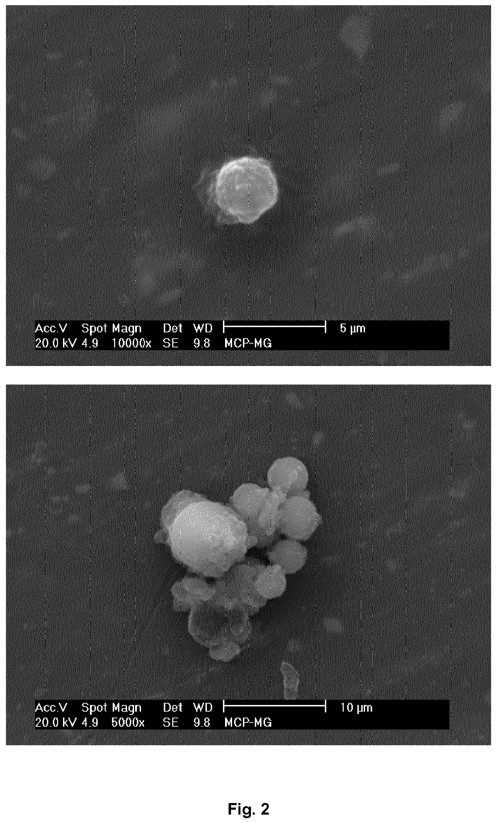

**Figure 2** shows Scanning Electron Microscope (SEM) images of microcapsules of the present invention obtained according to example 2 (using 2% magnetite as radiation absorber), having an average particle size between from about 2 and about 10 µm.

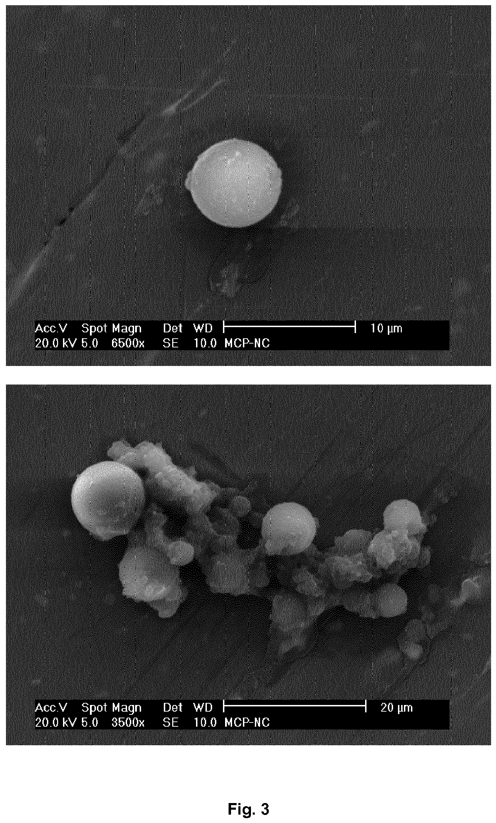

**Figure 3** shows Scanning Electron Microscope (SEM) images of microcapsules of the present invention obtained according to example 3 (using 2% carbon black as radiation absorber), having an average particle size between from about 2 and about 20 µm.

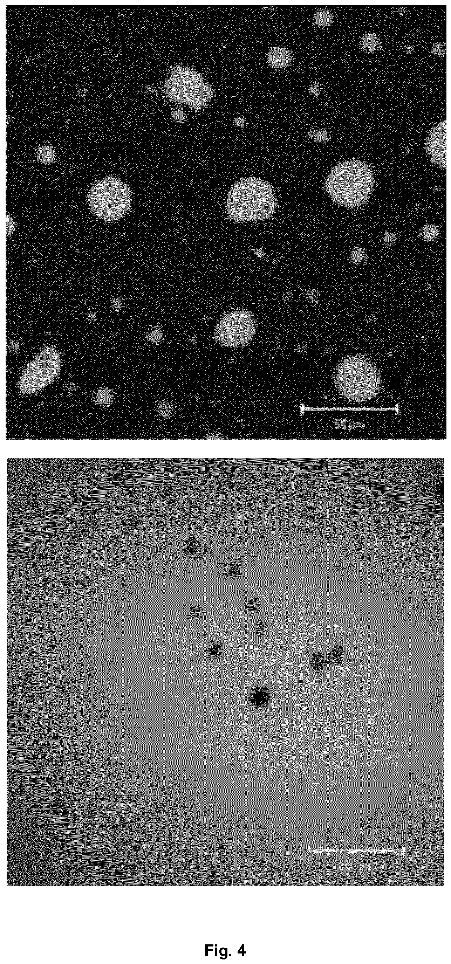

**Figure 4** shows confocal microscopy images of microcapsules of the present invention obtained according to example 1 (up) and their well dispersion in the bitumen (down). The color contrast image of the confocal microscope shows the isolated capsules in grey but when they are embedded in the bitumen they are observed in black color on a grey background corresponding to the bitumen.

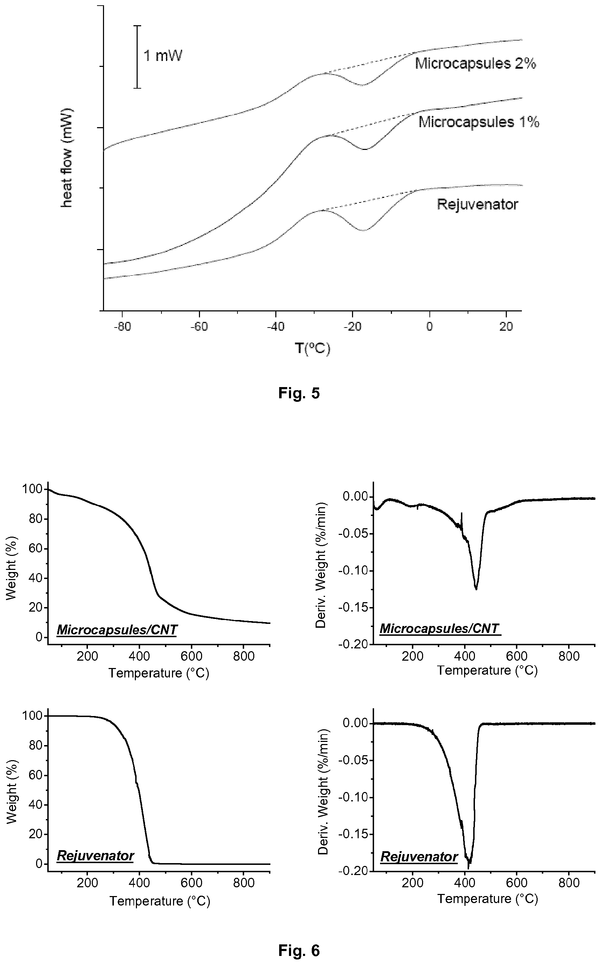

**Figure 5** is a heat flow versus temperature graph obtained by differential scanning calorimetry showing the glass transition temperature and the crystallization peak of encapsulated asphalt binder rejuvenator with different amounts of radiation absorber (1% and 2% CNT, respectively) obtained according to example 1. Thermogram of rejuvenator is also included. The amount of rejuvenator in the microcapsules is from about 60 % to about 70 % by weight.
**Figure 6** is a weight loss percentage versus temperature graph (left) and derivative of weight loss rate graph (right) obtained by thermogravimetry at 10 °C/min heating rate, showing the heat resistance of the microcapsules containing 2% of radiation absorber (CNT) obtained according to example 1. Thermogravimetry graphs of rejuvenator are also included below.

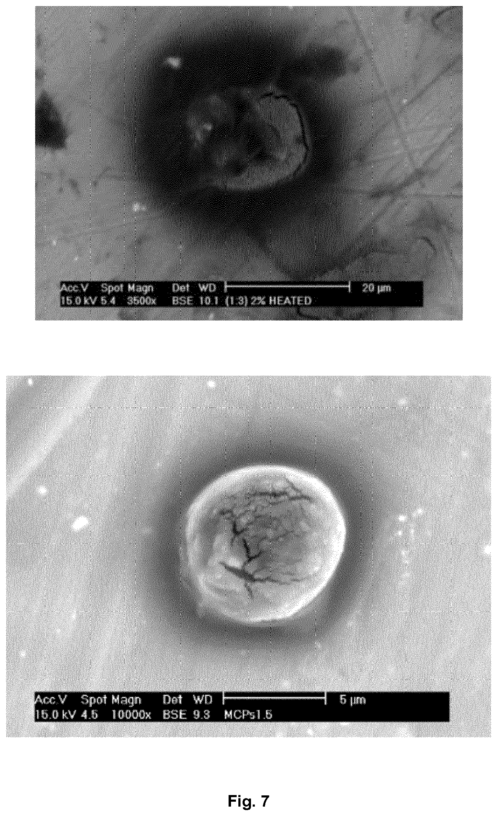

**Figure 7** shows SEM images of microcapsules obtained according to example 1 broken by microwave irradiation.

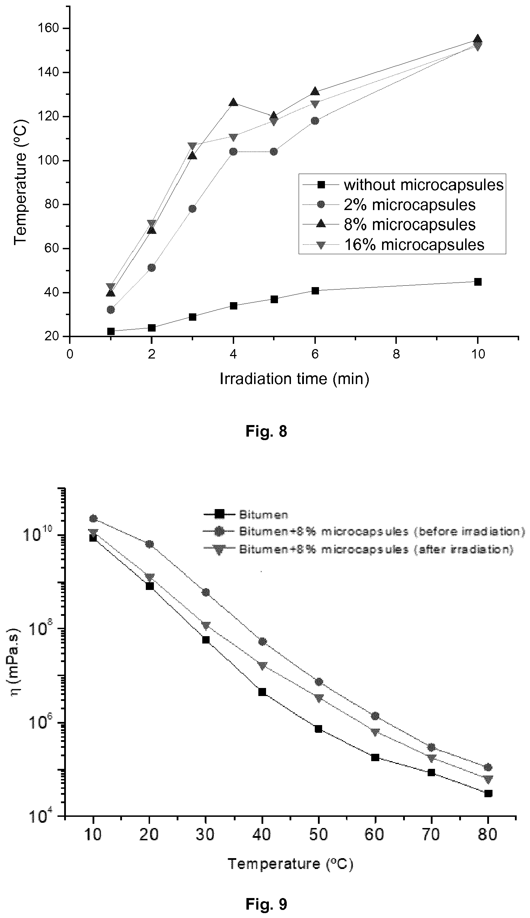

**Figure 8** is a temperature vs time graph showing the microwave-induced heating of four bitumen samples containing different amounts of microcapsules (0%, 2%, 8% and 16%, respectively) obtained according to example 1.
**Figure 9** is a dynamic viscosity versus temperature graph, at temperatures between 10 °C and 80 °C, of 3 bitumen samples (original bitumen, bitumen with 8% microcapsules before irradiation and bitumen with 8% microcapsules after irradiation, respectively) showing the bitumen viscosity recovery after breaking the microcapsules.

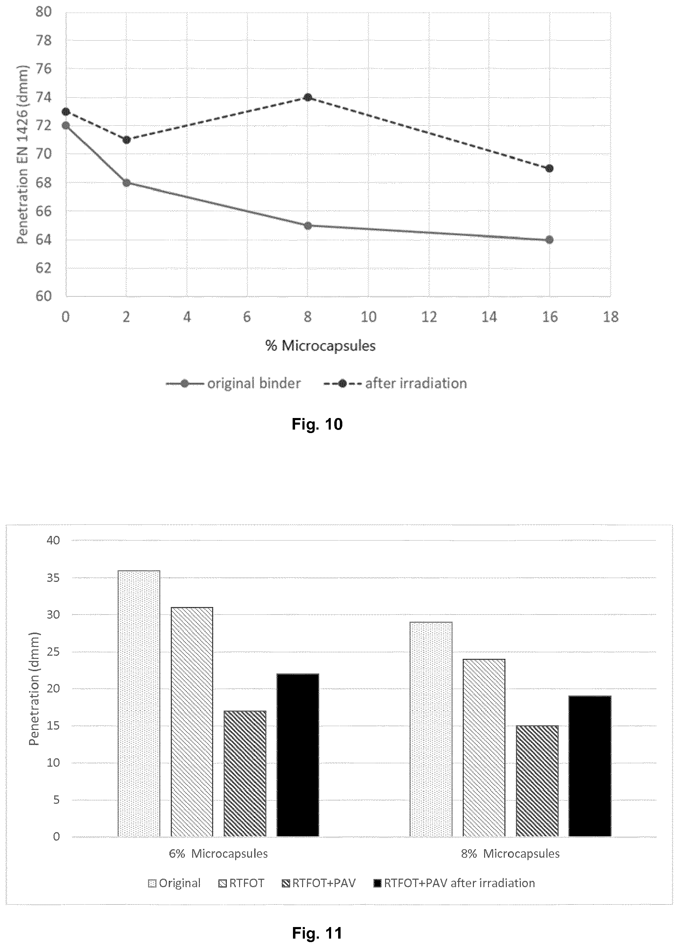

**Figure 10** is a graph comparing the penetration grade of four bitumen samples containing different amounts of microcapsules (0%, 2%, 8% and 16%, respectively) of the present invention, before and after irradiation. The original penetration grade was 70/100.
**Figure 11** shows the effect of aging in the penetration of a binder with 6% and 8% microcapsules content and the penetration recovery after irradiation of the most aged residue. Aging conditions were rolling thin film oven test (RTFOT, EN 12607-1) and a further step according to EN 14769 (PAV).

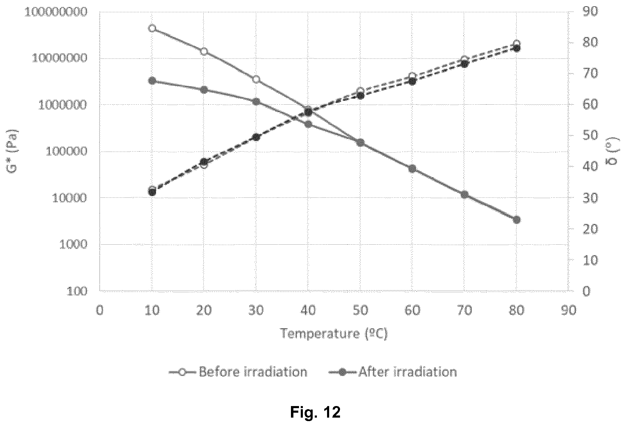

**Figure 12** shows the curves of complex modulus (G*) and phase angle (δ) versus temperature obtained by dynamic shear rheometry on a binder containing 6% microcapsules which was aged by RTFOT + PAV. Curves were recorded on aged samples before and after irradiation. After irradiation lower modulus values were obtained at low temperatures, indicating rejuvenation effect in the viscoelastic behaviour of the binder.

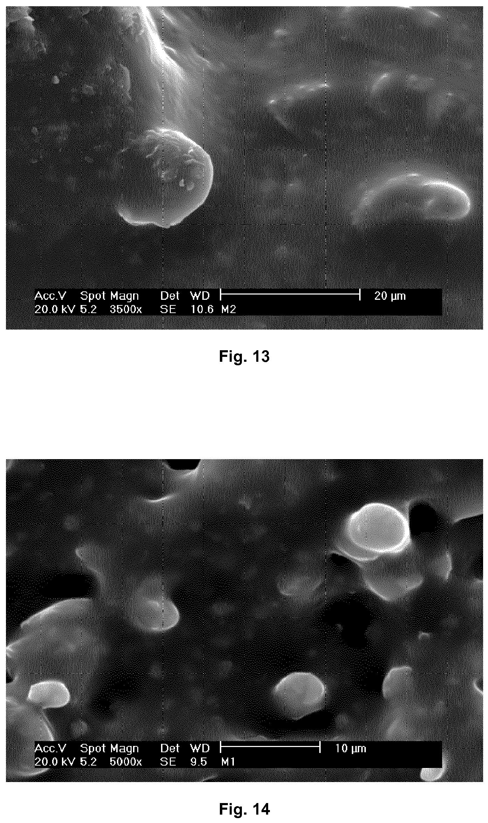

**Figure 13** shows SEM images of the binder with 6% microcapsules content in an AC 16 S asphalt mix for binder and wearing courses in mid and light traffic pavements. The binder content was 4.75% and the mineral skeleton consisted of siliceous aggregates. Marshall specimens (1200 g each) were prepared after mixing the aggregates and the binder at 160-165°C and compacting the resulting asphalt mix (75 impacts per side) at 155-160°C. It can be observed that the microcapsules remain unbroken after mixing with the aggregates and compacting.
**Figure 14** shows SEM images of the binder with 6% microcapsules content in BBTM11B discontinuous asphalt mix (designed for wearing courses in highway pavements). The binder content was 5% and the mineral skeleton consisted of siliceous aggregates. Marshall specimens (1050 g each) were prepared after mixing the aggregates and the binder at 160-165°C and compacting the resulting asphalt mix (50 impacts per side) at 155-160°C. It can be observed that the microcapsules remain unbroken after mixing with the aggregates and compacting.

### DETAILED DESCRIPTION OF THE INVENTION

Unless defined otherwise, all technical and scientific terms and expressions used herein have the same meaning as commonly understood to one of ordinary skill in the art to which this disclosure belongs.

During the construction and service life of a pavement asphalt binder material properties change in such a way that asphalt binders become stiffer and less resistive to fatigue/low temperature cracking. This is because a binder's volatile components evaporate and oxidize from the time it is constructed to the end of its service life. Oxidation of the binder over its service life causes polymerization to occur. Polymerization is the process by which the binder becomes more viscous at high temperatures and less viscous at low temperatures, thus called aging (Gerardu, J. and Hendriks, C. F., "Recycling of Road Pavement Materials in the Netherlands," In: Road Engineering division of Rijkswaterstaat, Delft.). The main determinant of an asphalt's viscosity is based on the amount of asphaltenes in the binder because they are more viscous than both resins and oils (Airey, G. D., "Rheological Properties of Styrene Butadiene Styrene Polymer Modified Road Bitumen," Fuel 82:1709-19 (2003); Wu et al. "Investigation of Temperature Characteristics of Recycled Hot Mix Asphalt Mixtures," Resour. Conserv. Recycl. 51:610-20 (2007). From oxidation the oil component in asphalt is converted to resins and the resin component is converted to asphaltenes. This is the reason hardening occurs in asphalt over time (Wu et al. "Investigation of Temperature Characteristics of Recycled Hot Mix Asphalt Mixtures," Resour. Conserv. Recycl. 51:610-20 (2007); Kandhal et al., "Performance of Recycled Hot Mix Asphalt Mixtures," National Center for Asphalt Technology Auburn (1995)). Rejuvenators are materials that contain maltene components and through a certain method of application are able to restore partially to fully the oxidized asphalt binder properties to its original viscoelastic state (Brownridge, J., "The Role of an Asphalt Rejuvenator in Pavement Preservation: Use and Need for Asphalt Rejuvenation," In: Compendium of Papers From the First International Conference on Pavement Preservation, Newport Beach, Calif. p. 351-64).

The present inventors have found and demonstrated that the incorporation into an asphalt binder of microcapsules having a strengthened polymer shell and containing a rejuvenator and a radiation absorber allows obtaining asphalt with a controlled self-healing capacity, as the rejuvenator is mainly released via application of irradiation. This technology is useful for increasing the lifetime of asphalt infrastructures in a very cost-effective and simple way, allowing immediate and local repair of the generated damage at will and without stopping traffic circulation. For instance, a vehicle equipped with a radiation generator system may pass over the damaged area while emitting appropriate radiation towards the road surface so that there is an increase of the local temperature that causes the microcapsules to break, releasing the rejuvenator into the asphalt.

### Microcapsules

The microcapsules proposed by the present invention comprise a polymer shell and a core comprising a bitumen rejuvenator and a radiation absorber. The shell of the microcapsules is designed to withstand mechanical stresses but to be breakable by heat. Suitable shells in terms of thickness and strength may be obtained by means of a two-step (or multi-step) *in-situ* polymerization method as defined further below.

In the context of the present invention, the core-shell microcapsules may have an average particle size from about 1 to about 1000 µm. According to a particular embodiment, the microcapsules have an average particle size from about 1 to about 500 µm, such as from about 1 to about 250 µm, from about 1 to about 100 µm, from about 1 to about 50 µm, from about 1 to about 30 µm or from about 2 to about 25 µm.

Polymers that may be used in the present invention for the shell/wall include, but are not limited to, aldehyde condensation polymers, alginates, polyethylenes, polyamides, polystyrenes, polyisoprenes, polycarbonates, polyesters, polyacrylates, polyureas, polyurethanes, polyolefins, polysaccharides, epoxy resins, vinyl polymers, and mixtures thereof. Amongst these polymeric materials, aldehyde condensation polymers are preferred. Aldehyde condensation polymers are well-known to the person skilled in the art of encapsulation: they are obtained in condensation reactions involving an aldehyde, normally formaldehyde, which is polymerized with a second monomer such as phenol, urea, or melamine. Suitable aldehyde condensation polymers for forming the polymeric encapsulating material include for instance aminoplast, phenoplast and amino-phenoplast resins.

Aminoplast resins are the condensation polymers of one or more aldehyde such as formaldehyde with one or more amine/amide-type compounds such as benzoguanamine, dicyandiamide, urea, melamine, melamine-urea and their derivatives such as methylurea. According to a particular embodiment, the aminoplast resin is selected from melamine-formaldehyde, urea-formaldehyde, melamine-urea-formaldehyde condensates and their derivatives.

Phenoplast or phenolic resins are the condensation polymers of one or more aldehyde such as formaldehyde with one or more phenolic-type compounds such as phenol, resorcinol, phenol-resorcinol, xylenol, cresol and their derivatives. According to a particular embodiment, the phenoplast resin is phenol-formaldehyde.

Amino-phenoplast resins are the condensation polymers of one or more aldehyde such as formaldehyde with one or more amine/amide-type compounds and one or more phenolic-type compounds. The amine/amide-type compound and the phenolic-type compound may be selected for instance from the above lists. A particular example of amino-phenoplast resin is urea-phenol-formaldehyde.

According to a particular embodiment, the shell polymeric material is selected from the group consisting of melamine-formaldehyde (MF), urea-formaldehyde (UF), melamine-urea-formaldehyde (MUF), phenol-formaldehyde (PF), urea-phenol-formaldehyde, and their derivatives such as the said polymers modified by an alcohol. The modification of these resins with monohydric (e.g. methanol, ethanol, isopropanol and butanol) and polyhydric (e.g. glycol) alcohols is well known. One example of alcohol modified polymer suitable as shell material is methanol modified melamine-formaldehyde (MMF). In a more particular embodiment, the shell is based on melamine-formaldehyde (MF) or methanol-melamine-formaldehyde (MMF).

The term "derivatives", in reference to the polymer material, is intended to mean that the monomers listed may bear substituents (e.g. methylurea) and/or may be modified by the addition of a modifier at the stage of polycondensation (e.g. MMF).

The polymer material of the microcapsule shell/wall is prepared from at least one prepolymer. The term "prepolymer" is defined to be inclusive of one or a combination of different monomers, oligomers, and/or macromers that are capable of forming a polymer. Thus, a "prepolymer" is a precursor of a polymer.

The shell thickness may generally be in the range of about 0.1 to about 10 µm, or about 0.1 to about 5 µm, or about 0.1 to about 3 µm, or about 0.1 to about 1 µm. In a particular embodiment, the shell has a thickness of about 0.1 to about 0.5 µm, and more particularly of about 0.2 µm.

The above-described polymer shell surrounds the rejuvenator material and the absorber contained in the core of the microcapsules.

Rejuvenators are chemical or bio-derived additives which typically contain a high proportion of maltenes, which serves to replenish the maltene content in the aged bitumen that has been lost as a result of oxidation leading to increased stiffness (Copeland, A., "Reclaimed Asphalt Pavement in Asphalt Mixtures: State of the Practice," (2011)). Binder aging is characterized by a change of the maltenes fraction into asphaltene through oxidation. The amount of asphaltene is related to the viscosity of asphalt. Firoozifar et al., "The Effect of Asphaltene on Thermal Properties of Bitumen," Chemical Engineering Research and Design 89:2044-2048 (2011). The addition of maltenes helps rebalance the chemical composition of the aged bitumen, which contain a high percentage of asphaltenes (causing high stiffness and low creep rate). Rejuvenators recreate the balance between the asphaltene and maltene by providing more maltenes and/or by allowing better dispersion of the asphaltenes (Elseifi et al., "Laboratory Evaluation of Asphalt Mixtures Containing Sustainable Technologies," Journal of the Association of Asphalt Paving Technologists 80 (2011).

Rejuvenators are materials that vary greatly according to their chemical composition and origin. Rejuvenator materials are familiar to those of skill in the art and virtually any type of material capable of reconstituting the bitumen chemical composition is considered to be within the scope of the present invention. Materials useful as rejuvenators include organic or bio-based oils (both animal and vegetable) as well as mineral oils (e.g. petroleum-based extracted oils) such as paraffin oils, aromatic extracts, naphtenic oils and their blends. According to a particular embodiment, the rejuvenator is selected from the group consisting of paraffinic oils, aromatic extracts, naphtenic oils, triglycerides & fatty acids-based products and tall oils or any mixture thereof.

Examples of paraffinic oils include, but are not limited to, waste engine oil (e.g. from cars and trucks), waste engine oil bottoms, Valero VP 165® and Storbit®.

Examples of aromatic extracts include, but are not limited to, Hydrolene®, Reclamite®, Cyclogen L® and ValAro 130A®.

Examples of napthenic oils include, but are not limited to, SonneWarmix RJ™ and Ergon HyPrene®.

Products derived from vegetable oils containing triglycerides & fatty acids are also useful. Examples of triglycerides & fatty acids-based products include, but are not limited to, waste vegetable oil (e.g. waste cooking oils, also referred to as "yellow grease", including for instance peanut, sunflower, and canola used oils), waste vegetable grease (also a food industry organic waste stream but semi solid at ambient temperatures due to the predominance of saturated Lauric and Myristic triglycerides), brown grease and Delta S®.

Tall oil is a byproduct of paper manufacturing and is concentrated from kraft liquors. Tall oil is available either in crude form or as refined. Examples of tall oil products include, but are not limited to, Sylvaroad™ RP1000, Hydrogreen® and Evoflex CA/CA4®.

Additional commercially available rejuvenators to those previously mentioned are Paxole 1009®, Cyclepave® and ACF Iterlene 1000®.

In a particular embodiment, the bitumen rejuvenator used is one or more mineral oils selected from paraffin oils, aromatic extracts, naphtenic oils, or any mixture thereof. In a more particular embodiment, the rejuvenator is an aromatic extract.

Typically, the rejuvenator may be present in an amount of at least about 25% or 50% by weight based on the total weight of the microcapsule. According to particular embodiments, the amount of rejuvenator may be at least about 55% or at least about 60% by weight of the microcapsule. More specifically, it has been found by means of calorimetry calculations that an amount of rejuvenator ranging from about 60% to about 75% or from about 60% to about 70% by weight relative to the weight of the microcapsule is particularly suitable in certain embodiments.

The microcapsules also contain a radiation absorber or radiation-sensitive material so that when a suitable electromagnetic field is applied said material is capable of absorbing electromagnetic radiation, provoking an increase of the local temperature which in turn triggers the microcapsules to break, releasing their core content into the asphalt. In one embodiment, the radiation-sensitive material is sensitive to infrared radiation. In another embodiment, the radiation-sensitive material is sensitive to radiofrequency radiation. In another embodiment, the radiation-sensitive material is sensitive to microwaves. In yet another embodiment the radiation-sensitive material may be sensitive to combinations of these and/or other forms of radiation.

Radiation absorber materials can be readily identified using simple screening tests, for instance, by directing radiation of a selected wavelength at a dry sample of the material, and determining if the material is heated by the incident radiation.

As is commonly accepted and as used herein, infrared (IR) wavelengths extend from the nominal red edge of the visible spectrum at about 700 nm (frequency 430 THz) to about 1 mm (300 GHz). Thus, an IR absorber for the purposes of this specification may be defined as a compound which absorbs radiation in the wavelength range from about >700 nm to about 1 mm.

Examples of IR absorbers include organic and inorganic materials, for example, antimony tin oxide, titanium nitride, organic quaterrylenes, carbon black, graphite, calcium silicates, zirconium silicates, zeolite, mica, kaolin, talc, cordierite, tungsten oxide, reduced tungsten oxides, tungstates, and tungsten bronzes. Other examples of compounds that may function as IR absorbers include colourants such as organic pigments, inorganic pigments and polymer-compatible organic dyes.

As is commonly accepted and as used herein, radio frequency (RF) extends from about 1 mm (frequency 300 GHz) to 100 km (3 KHz). Thus, a RF absorber for the purposes of this specification may be defined as a compound which absorbs radiation in the wavelength range from about >1 mm to about 100 km. The radio-frequency part of the electromagnetic spectrum may be further broken down into two classes: radio waves and microwaves. Microwaves are commonly considered to extend from 1 mm (frequency 300 GHz) to 1 m (300 MHz), though some sources describe that the microwave region ranges from 1 cm to 1 m (corresponding to 30 GHz-300 MHz). Thus, a microwave absorber for the purposes of this specification may be defined as a compound which absorbs radiation in the wavelength range from about >1 mm to about 1 m, hence including also the more narrow definition from about >1 cm to about 1 m. Particular preference is given to the technically relevant frequencies of 2.45 GHz, 433-444 MHz, and 902-928 MHz.

Suitable microwave absorbers are for example dielectric and magnetic materials. In certain embodiments, examples of microwave-sensitive materials include, but are not limited to, metals, including transition metals, such as Al, Fe, Zn, Ti or Cu, their salts, their oxides for example, such as ZnO, iron oxides, especially ferrites such as magnetite, and TiO₂, carbonates or sulfides, carbon such as graphite, carbon black, nanoparticulate carbon or nanotubes, silicon carbides, silicon, alkali metal salts and alkaline earth metal salts, certain polymers, etc. Non-limiting examples of microwave-sensitive polymers include poly(pyrrole)s, poly(acetylene)s, poly(thiophene)s, poly(aniline)s, poly(fluorene)s, poly(3-alkylthiophene)s, polytetrathiafulvalenes, polynaphthalenes, poly(p-phenylene sulfide), and poly(para-phenylene vinylene)s, or the like, as well as combinations or co-polymers of these and/or other polymers.

Preference is given to carbon nanotubes, carbon black, Fe₃O₄, and graphite. Carbon nanotubes (CNTs) absorb light across the entire spectrum and efficiently convert the absorbed light into heat.

The amount of absorber may be for instance about 0.5%, about 1%, about 1.5% or about 2%, about 2.5% or about 3% by weight with respect to the weight of the sum of rejuvenator and absorber. In general, amounts of radiation absorber equal or below 2% (w/w) with respect to the total mass of rejuvenator and absorber are sufficient to achieve an efficient heating.

### Preparation of microcapsules

The microcapsules of the present invention may be prepared through an emulsion-templated encapsulation method based on a two-step (or multi-step) "in situ" polymerization. This procedure includes two main stages, namely i) the previous formation of an oil-in-water emulsion comprising discrete droplets of the materials to be encapsulated and ii) the polymer shell formation (encapsulation) by sequentially polymerizing two or more portions of prepolymer so as to increase the shell thickness and enhance its rigidity/toughness.

More specifically, the method of making microcapsules according to the present invention comprises:
(a) preparing an organic phase comprising the radiation absorber dispersed in the bitumen rejuvenator;
(b) preparing an aqueous phase comprising a surfactant;
(c) mixing the above two phases so as to form an emulsion comprising droplets of bitumen rejuvenator and radiation absorber;
(d) mixing prepolymer with the emulsion so that the prepolymer polymerizes in situ at the interface of the droplets to form a shell encapsulating the bitumen rejuvenator and the radiation absorber;
(e) adding more prepolymer to cause a further polymerization in the shell, so a thicker and more resistant shell is obtained;
   optionally, repeating this step (e) one or more times;
   and
(f) optionally, washing and drying the microcapsules.

In step (a), the radiation absorber may be dispersed in the rejuvenator by known dispersion techniques such as stirring and/or sonication. In a typical procedure, both mechanical stirring and bath sonication may be used simultaneously, preferably under heating. According to a particular embodiment, the dispersion may be prepared by means of vigorous stirring, using an ultra-high shear mixing device (for example, such as the high speed Ultra-Turrax®) e.g. at about 2000 rpm, 3000 rpm or 4000 rpm, and ultrasonic bath under heating (e.g. at about 40 °C, 50 °C, 60 °C, 70 °C, or 80 °C).

The amount of absorber may normally be equal or less than about 3%, preferably equal or less than about 2%, by weight with respect to the sum of the weights of rejuvenator and absorber.

For instance, a radiation absorber such as carbon nanotubes (0.5-2% (w/w)) may be dispersed in 30 g of rejuvenator during one hour using Ultra-Turrax® at 3000 rpm and ultrasonic bath at 60 °C (simultaneously).

In step (b), the aqueous phase comprising a surfactant may be prepared by known dispersion techniques such as stirring and/or sonication. In a typical procedure, both mechanical stirring and bath ultrasonication may be used simultaneously, although mechanical stirring is usually employed. Heating is also usually employed. According to a particular embodiment, surfactant (tensioactive) agents are incorporated to water at about 40 °C, 50 °C, 60 °C, 70 °C or 80 °C and mechanically stirred at about 100 rpm, 200 rpm, 300 rpm, 400 rpm or 500 rpm.

The surfactant may be amphiphilic molecules, which includes but not only sodium dodecylbenzenesulfonate, sodium dodecylsulfate or sodium laurylsulfate, or amphiphilic polymers, which includes but not only poly(vinyl alcohol), poly(ethylene-alt-maleic anhydride) or poly(styrene-alt-maleic anhydride), non-ionic surfactants and stabilizers which include but not only nonylphenol ethoxylates (e.g. Tergitol® NP-10), octylphenol ethoxylates (e.g. Triton® X-100) or sorbitan esters (e.g. SPAN® 80: sorbitan oleate), or a combination thereof. The amount of surfactant may normally be equal or less than about 15%, preferably equal or less than about 10%, such as about 1-10%, 2-10%, or 3-10% by weight with respect to the weight of the water used. In certain embodiments, a base such as NaOH is also added to the aqueous phase comprising the surfactant.

For instance, a surfactant such as styrene maleic anhydride (SMA) copolymer (3-10% (w/w)) may be dispersed in 100 mL of pure water with 0.8% (w/w) of NaOH and the system is stirred under heating (at 50 to 60 °C) during 1 hour.

In step (c), the aqueous phase comprising a surfactant is preferably heated, for instance up to about 50 to 60 °C and pH is adjusted (if necessary). Acids (for instance stearic, citric, hydrochloric or sulfuric) or bases (for instance sodium hydroxide) may be used for pH adjustment (where pHs ranging from about 4 to 5 are preferred). Then the dispersion of rejuvenator including the radiation absorber is added over the aqueous phase (or vice versa) and stirred with a ultra-high shear mixing device or the like, for instance at about 1000 to 4000 rpm for about 10 min to 30 min.

For instance, stearic acid is added to the suspension obtained in (b) until pH reaches 4 to 5 and the aqueous dispersion of the organic phase prepared in (a) which includes the radiation absorber dispersed in rejuvenator is added under vigorous stirring with a ultra-high shear Ultra-Turrax® device at 2000 to 3000 rpm during at least 10 min.

In step (d), a prepolymer is mixed with (preferably added to) the emulsion prepared in the previous step, normally under heating (e.g. about 40-70 °C) and stirring (e.g. 100-700 rpm). In a particular embodiment, the emulsion prepared in (c) is transferred to a vessel thermostated at about 40 to 70 °C (e.g. about 50 to 60 °C), and prepolymer such as methanol-melamine-formaldehyde (MMF) prepolymer is carefully added with stirring at about 100 to 700 rpm, and it is left stirring during about 1 hour.

For instance, 15 g of melamine-formaldehyde prepolymer (MMF) are added dropwise to 100 mL of the emulsion obtained in (c) at 50-60 °C, with stirring at 300 rpm during 1 hour.

In step (e), a further polymerization of prepolymer occurs in order to increase shell thickness and resistance, achieving the desired thermal and mechanical stability. This further polymerization is normally carried out at a temperature higher than that of the previous step (e.g. 70-90 °C) and under stirring (e.g. 100-700 rpm). In a particular embodiment, the suspension obtained in (d) is heated, e.g. to about 70-90 °C or about 75 to 85 °C, and a second addition step of prepolymer takes place with stirring at about 100 to 700 rpm, and it is left stirring during about 1 hour. The prepolymer or prepolymers used in this step may be the same or different as that or those in the previous one.

For instance, the temperature may be increased to 75-85 °C to perform the second polymerization step, another 15 g of MMF prepolymer are added dropwise and after 1 hour the temperature is slowly decreased to room temperature with continuous stirring. After that the stirring is stopped and the product precipitates slowly in the reaction vessel.

Step (e) can be repeated one or more times, if necessary.

Each one of the polymerizations may be typically accomplished in about 30 min to 120 min; in certain embodiments, 1 h was sufficient. It may be appreciated that the polymerization steps may normally also include cross-linking.

In step (f), which is optional, the resultant microcapsules are washed and dried. For washing, pure water, or mixtures of water and alcohol (e.g. methanol ethanol) are suitable. For instance, a water/ethanol 70/30 or 90/10 solution may be used

Then, washed microcapsules may be dried, for instance in a vacuum oven at temperatures between room temperature and 40 °C, during 5 hours to 3 days.

### Uses & Applications

The microcapsules of the present invention may be used for preparing a self-healing bitumen. In a particular embodiment, the microcapsules may be added to the bitumen at a temperature ranging from about 120 °C to 180 °C and dispersed using a high shear mixing device or the like during the minimum time required to ensure proper dispersion of the microcapsules.

In some embodiments, the bitumen may comprise about 1%, 2%, 4%, 6%, 8%, 10% 12%, 14%, 16%, 18%, 20% or more of rejuvenating microcapsules.

A further aspect of the present invention is directed to an asphalt mixture or an infrastructure (such as a road or road pavement) comprising the self-healing bitumen of the invention.

A further aspect of the present invention is directed to a method for repairing an infrastructure which comprises the self-healing bitumen of the invention, said method comprising irradiating the infrastructure in the wavelength range of the absorption of the absorber.

Advantageously, the self-healing bitumen proposed by the present invention allows immediate and local repair of roads in a controlled fashion and without stopping traffic circulation. For instance, a vehicle equipped with a radiation generator system may pass over the damaged area while emitting appropriate radiation towards the road surface so that there is an increase of the local temperature that causes the microcapsules to break, releasing the rejuvenator into the asphalt.

The radiation directed at the radiation-sensitive material may be any electromagnetic radiation, for example, in the microwave frequency and/or radiofrequency range. For example, the radiation may be microwave radiation having a frequency of between about 0.3 GHz and about 300 GHz, between about 0.3 GHz and about 100 GHz, between about 0.3 GHz and about 10 GHz, between about 0.3 GHz and about 1 GHz, between about 1 GHz and about 100 GHz, between about 1 GHz and about 10 GHz, or the like.

In some cases, lower radiofrequency radiation may be used, e.g., in conjunction or instead of microwave radiation. For example, the radiation may be between about 0.005 GHz and about 0.3 GHz, between about 0.01 GHz and about 0.3 GHz, between about 0.005 GHz and about 0.1 GHz, between about 0.01 GHz and about 0.1 GHz, between about 0.1 GHz and about 0.3 GHz, or the like.

The radiation may be applied at any suitable power and/or intensity. For instance, the radiation may be applied at a transmit power level of no more than about 5 W, about 10 W, about 15 W, about 20 W, about 50 W, about 100 W, about 200 W, about 400 W, about 500 W, about 750 W, or about 1000 W. In certain embodiments, the power level may be no more than about 5 W/m2, about 10 W/m2, about 15 W/m2, about 20 W/m2, about 50 W/m2, about 100 W/m2, about 200 W/m2, about 400 W/m2, about 500 W/m2, about 750 W/m2, or about 1000 W/m2. In one embodiment, a frequency of about 915 MHz may be used; in another embodiment, a frequency of 2.4 GHz may be used. In some cases, a range of frequencies may be used, for example, a range of frequencies centering around about 915 MHz or around about 2.4 GHz, or any other suitable average. In still another embodiment, microwave radiation having an average frequency of between about 915 MHz and about 2.4 GHz may be used.

Microwave radiation and/or radiofrequency radiation may be produced using any suitable source of microwave and/or radiofrequency radiation, including many commercially-available sources. For instance, microwave radiation may be produced using microwave applicators (which may be handheld in some cases), vacuum tube-based devices (e.g., the magnetron, the klystron, the traveling-wave tube, or the gyrotron), certain field-effect transistors or diodes (e.g., tunnel diodes or Gunn diodes), or the like. In one embodiment, the microwave radiation may be coherent radiation such as that produced by a maser.

As used herein, the term "about" means a slight variation of the value specified, preferably within 10 percent of the value specified. Nevertheless, the term "about" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. As an illustration, a numerical range of "about 1 % to about 5 %" should be interpreted to include not only the explicitly recited values of about 1 % to about 5 %, but also include individual values and sub-ranges within the indicated range. Thus, included in this numerical range are individual values such as 2, 3. and 4 and sub-ranges such as from 1-3, from 2-4, and from 3-5, etc. This same principle applies to ranges reciting only one numerical value.

By room temperature is meant herein that the reactions or processes are performed without heating or cooling. Generally, by room temperature may be understood as a temperature between about 15 °C and about 30 °C, or more particularly between about 20 °C and about 25 °C.

It should be understood that the scope of the present disclosure includes all the possible combinations of embodiments disclosed herein.

The following examples are merely illustrative of certain embodiments of the invention and cannot be considered as restricting it in any way.

### Examples

### 1. Preparation of Microcapsules containing CNT and rejuvenator.

Emulsification: Different amounts of CNT (0.5-2% (w/w)) were dispersed in 30 g of rejuvenator (aromatic extract derived from mineral oil) during one hour using Ultra-turrax at 3000 rpm and ultrasonic bath at 60 °C (simultaneously).

3-10 % (w/w) SMA, 0.2 % (w/w) Tergitol® NP-10 and 0.8 % (w/w) NaOH were added to 100 mL water at 50-60 °C and allowed stir at 300 rpm (the pH jumps to 9-10 and decreases during mixing time). After 1h, stearic acid was added dropwise to adjust the pH to 4-5 (If necessary).

The CNT/rejuventator dispersion was added under vigorous stirring at 2000 rpm, thereafter the whole solution was emulsified at 3000 rpm (ultraturrax or similar) for 10 min at 60 °C.

Encapsulation: 15 g of MMF prepolymer were added dropwise to the emulsion at 50-60 °C, with a stirring speed of 300 rpm. After 1h, solidification was observed (i.e. a shell of cross-linked MMF polymer is formed around the core of CNT and rejuvenator), temperature was then increased to 75-85 °C and another 15 g of MMF prepolymer were added dropwise. After 1h of further polymerization, the temperature was decreased slowly to room temperature.

Washing: The resultant microcapsules were washed thoroughly using deionized water/ethanol mixtures (70/30) and dried in a vacuum oven at room temperature (see Figures 1 and 4 (up)).

### 2. Preparation of Microcapsules containing magnetite and rejuvenator.

The process of example 1 was followed but using magnetite as radiation absorber instead of CNT (see Figure 2).

### 3. Preparation of Microcapsules containing carbon black and rejuvenator.

The process of example 1 was followed but using carbon black as radiation absorber instead of CNT (see Figure 3).

### 4. Microcapsules characterization.

The resultant microcapsules of example 1 were characterized by SEM (see Figure 1). The amount of rejuvenator encapsulated was obtained by calorimetry, by measuring its crystallization heat inside the microcapsules (see Figure 5).

### 5. Thermal stability.

The resultant microcapsules of example 1 were heated at 10 °C/min up to 900 °C to analyze thermal stability (see Figure 6). Release of rejuvenator is not observed until shell degradation occurring at temperatures above the service conditions.

### 6. Mechanical stability.

The resultant microcapsules of example 1 were submitted to mixing with the bitumen at high shear ratios and temperatures between 10 °C and 150 °C. Good dispersions were achieved as seen by confocal microscopy (see Figure 4 (down)). Release of rejuvenator was not produced, as no changes in the bitumen rheology were observed.

### 7. Release of rejuvenator by radiation of the microcapsules.

The resultant microcapsules of example 1 were irradiated with a 2.45 GHz microwave source during 5 min and observed by SEM. Breaking of microcapsules and release of rejuvenator is confirmed (see Figure 7).

### 8. Release of rejuvenator by irradiation of the microcapsules embedded on the bitumen.

The resultant microcapsules of the example 1 were dispersed (2% to 16% by weight) in the bitumen under stirring and heating. The mixture was submitted during 30 min to a 2.45 GHz microwave irradiation source. The release of rejuvenator is observed by means of a decrease in the viscosity at any temperature (see Figure 9).

As previously stated, the release of rejuvenator is expected to have an effect on penetration of bituminous binders: the incorporation of the rejuvenator into the bitumen colloidal structure leads to softening the bitumen. Penetration measurements according to EN 1426 European standard were conducted on a 70/100 bituminous binder doped with microcapsules content from 2% to 16% by weight both before and after irradiation (Figure 10). It was observed a relevant softening of the bitumen, which indicates that the rejuvenator has been effectively released after irradiation and that diffusion took place

### 9. Heating by irradiation.

Parallel to microcapsules breaking and releasing of rejuvenator, heating of the microcapsules was observed by a FLIR camera up to 160 °C (see Figure 8).

### 10. Bitumen healing

A standard 50/70 penetration paving grade bitumen was doped with rejuvenator containing microcapsules and subjected to two aging standardized procedures. Penetration was measured in the original binder and after each aging protocol, as well as after irradiation in the highest aging stage (see Figure 11).

In a first step, samples of binder containing rejuvenating microcapsules were subjected to aging according EN 12607-1 Rolling Thin film Oven Test (RTFOT) procedure, which mimics the aging experienced by bitumen at an industrial mixing plant. Penetration (according to EN 1426) was measured both before and after RTFOT aging and the usual hardening of the binder was observed. Considering that rejuvenator release would induce a penetration increase, the observed penetration decrease indicates that no breaking of the microcapsules takes place during RTFOT aging.

In a second step, a further aging step was conducted according to EN 14769 (Pressure Aging Vessel, PAV). In this case, the binder containing microcapsules was first subjected to a RTFOT (EN 12607-1) aging step and then to a PAV aging procedure (EN 14769). This aging protocol simulates the aging state of a bituminous binder after 10-15 years on the road. Penetration measurements showed further hardening of the binder reaching the typical values of 50/70 RTFOT+PAV aged binders, indicating no breakage of microcapsules in this step as well.

Therefore we can conclude that microcapsules are resistant to standard aging processes taking place during mixing and service life.

The binder containing microcapsules and aged through RTFOT+PAV was irradiated and in this case a 25-30% penetration increase was observed, indicating that the microcapsules break during irradiation and the rejuvenator is released inducing softening (rejuvenation) of the material.

Rheological measurements of the most aged binder (RTFOT+PAV) were conducted before and after irradiation and the complex modulus (G*) and phase angle (δ) versus temperature curves are shown in Figure 12. It can be observed that after irradiation lower modulus values were obtained at low temperatures, indicating a lower stiffness of the binder and therefore a rejuvenation effect in the viscoelastic behaviour of the binder.

### 11. Stability in asphalt mixtures

The stability of the microcapsules of the invention was also examined in different asphalt mixtures after compaction.

A binder containing 6% rejuvenating microcapsules was mixed with aggregates to form an AC 16 S asphalt mix for binder and wearing courses in mid and light traffic pavements. The binder content was 4.75% and the mineral skeleton consisted of siliceous aggregates. Marshall specimens (1200 g each) were prepared after mixing the aggregates and the binder at 160-165°C and compacting the resulting asphalt mix (75 impacts per side) at 155-160°C. It was observed by SEM that the microcapsules remained unbroken after mixing with the aggregates and compacting (see Figure 13).

A binder containing 6% rejuvenating microcapsules was mixed with aggregates to form a BBTM11B discontinuous asphalt mix (designed for wearing courses in highway pavements). The binder content was 5% and the mineral skeleton consisted of siliceous aggregates. Marshall specimens (1050 g each) were prepared after mixing the aggregates and the binder at 160-165°C and compacting the resulting asphalt mix (50 impacts per side) at 155-160°C. It was observed by SEM that the microcapsules remained unbroken after mixing with the aggregates and compacting (see Figure 14).

### Bibliographic references

Agzenai Y, Pozuelo J, Sanz J, Perez I, Baselga J. Advanced Self-Healing Asphalt Composites in the Pavement Performance. Field: Mechanisms at the Nano Level and New Repairing Methodologies. Recent Patents on Nanotechnology, 2015, 9, 43-50.
Airey, G. D., "Rheological Properties of Styrene Butadiene Styrene Polymer Modified Road Bitumen," Fuel 82:1709-19 (2003)
Al-Mansoori, T., Norambuena-Contreras, J., Micaelo, R., Garcia, A. Self-healing of asphalt mastic by the action of polymeric capsules containing rejuvenators. Construction and Building Materials, 2018, 161, 330-339
Brownridge, J., "The Role of an Asphalt Rejuvenator in Pavement Preservation: Use and Need for Asphalt Rejuvenation," In: Compendium of Papers From the First International Conference on Pavement Preservation, Newport Beach, Calif. p. 351-64
Chung K, Lee S, Park M, Yoo P, Hong Y (2015) Preparation and characterization of microcapsule-containing self-healing asphalt. J. Ind. Eng. Chem. 330-337.
Copeland, A., "Reclaimed Asphalt Pavement in Asphalt Mixtures: State of the Practice," (2011)
Elseifi et al., "Laboratory Evaluation of Asphalt Mixtures Containing Sustainable Technologies," Journal of the Association of Asphalt Paving Technologists 80 (2011)
Firoozifar et al., "The Effect of Asphaltene on Thermal Properties of Bitumen," Chemical Engineering Research and Design 89:2044-2048 (2011)
Gallego, J., Del Val, M.A., Contreras, V., Paez, A., 2013. Heating asphalt mixtures with microwaves to promote self-healing. Constr. Build. Mater 42, 1-4.
Garcia, A., Schlangen, E., Van De, Ven M., 2010. Two Ways of Closing Cracks on Asphalt Concrete Pavements: Microcapsules and Induction Heating, 573-576.
Garcia, A., Norambuena-Contreras, J., Pacheco-Bueno, M., Partl, M.N., 2015. Single and multiple healing of porous and dense asphalt concrete. J. Intell. Mat. Syst. Struct. 26, 425-433.
Gerardu, J. and Hendriks, C. F., "Recycling of Road Pavement Materials in the Netherlands," In: Road Engineering division of Rijkswaterstaat, Delft.
Kandhal et al., "Performance of Recycled Hot Mix Asphalt Mixtures," National Center for Asphalt Technology Auburn (1995)
Liu, Q., Garcia, A., Schlangen, E., Van De, Ven M., 2011. Induction healing of asphalt mastic and porous asphalt concrete. Constr. Build. Mater 25, 3746-3752.
Menozzi, A., Garcia, A., Partl, M.N., Tebaldi, G., Schuetz, P., 2015. Induction healing of fatigue damage in asphalt test samples. Constr. Build. Mater 74, 162-168.
Su JF, Schlangen E (2012) Synthesis and physicochemical properties of high compact microcapsules containing rejuvenator applied in asphalt. Chem Eng J 198-199: 289-300
Sun D, Li B, Ye F, Zhu X, Lu T, Tian Y. (2018) Fatigue behavior of microcapsule-induced self-healing asphalt concrete. Journal of Cleaner Production 188 466-476.
Wu et al. "Investigation of Temperature Characteristics of Recycled Hot Mix Asphalt Mixtures," Resour. Conserv. Recycl. 51:610-20 (2007)

## Claims

1. A microcapsule comprising:
a polymer shell; and
a core comprising a bitumen rejuvenator and a radiation absorber;
said microcapsule being obtainable by a process comprising:
i) preparing an emulsion comprising droplets of an organic phase which comprise the core materials; and
ii) encapsulating said core materials by polymerizing in situ at least one prepolymer at the periphery of said droplets, wherein the polymerization is carried out in two or more steps by mixing a first portion of prepolymer with the emulsion so that a first polymerization step takes place, performing a second polymerization step with a second portion of prepolymer, and optionally performing further polymerization steps with further portions of prepolymer.

2. The microcapsule according to claim 1, wherein the polymer shell is selected from the group consisting of aldehyde condensation polymers, alginates, polyethylenes, polyamides, polystyrenes, polyisoprenes, polycarbonates, polyesters, polyacrylates, polyureas, polyurethanes, polyolefins, polysaccharides, epoxy resins, vinyl polymers, and mixtures thereof.

3. The microcapsule according to claim 2, wherein the polymer shell is selected from the group consisting of aminoplast, phenoplast and amino-phenoplast resins.

4. The microcapsule according to claim 3, wherein the polymer shell is selected from the group consisting of melamine-formaldehyde (MF), urea-formaldehyde (UF), melamine-urea-formaldehyde (MUF), phenol-formaldehyde (PF), urea-phenol-formaldehyde, and their derivatives.

5. The microcapsule according to any one of claims 1 to 4, wherein the bitumen rejuvenator is a bio-based or mineral oil.

6. The microcapsule according to any one of claims 1 to 5, wherein the radiation absorber is a microwave absorber that absorbs radiation in the wavelength range from about >1 mm to about 1 m.

7. The microcapsule according to claim 6, wherein the radiation absorber is selected from the group consisting of metals, metal salts, metal oxides, metal carbonates, metal sulfides, carbon, carbon black, nanoparticulate carbon or nanotubes, silicon carbides, silicon, alkali metal salts and alkaline earth metal salts and polymers.

8. The microcapsule according to claim 7, wherein the radiation absorber is selected from the group consisting of carbon nanotubes, carbon black, Fe₃O₄, and graphite.

9. The microcapsule according to any one of claims 1 to 8, wherein:
the polymer shell is selected from the group consisting of aminoplast, phenoplast and amino-phenoplast resins;
the rejuvenator is selected from the group consisting of paraffinic oils, aromatic extracts, naphtenic oils, triglycerides & fatty acids-based products and tall oils or any mixture thereof; and
the radiation absorber is a microwave absorber that absorbs radiation in the wavelength range from about >1 mm to about 1 m.

10. A process for preparing microcapsules according to any one of claims 1 to 9, said process comprising:
i) preparing an emulsion comprising droplets of an organic phase which comprise the core materials; and
ii) encapsulating said core materials by polymerizing in situ at least one prepolymer at the periphery of said droplets, wherein the polymerization is carried out in two or more steps by mixing a first portion of prepolymer with the emulsion so that a first polymerization step takes place, performing a second polymerization step with a second portion of prepolymer, and optionally performing further polymerization steps with further portions of prepolymer.

11. A self-healing bitumen comprising the microcapsules according to any one of claims 1 to 9.

12. An asphalt mixture or an infrastructure comprising the self-healing bitumen according to claim 11.

13. Use of microcapsules according to any one of claims 1 to 9 in the preparation of a self-healing bitumen.

14. A method for repairing an infrastructure which comprises the self-healing bitumen according to claim 11, said method comprising irradiating the infrastructure in the wavelength range of the absorption of the radiation absorber.
